# EUROPÄISCHE PATENTSCHRIFT

(11) **EP 2 155 516 B1**
(45) Veröffentlichungstag und Bekanntmachung des Hinweises auf die Patenterteilung: **20.10.2010**
(21) Anmeldenummer: 08757907.4
(22) Anmeldetag: 12.05.2008
(51) Int. Cl.: B60R 9/058

(54) **QUERDACHTRÄGER ZUR BEFESTIGUNG AN LÄNGSDACHTRÄGERN VON TRANSPORTMITTELN**
CROSS BAR ROOF RACK FOR FASTENING TO ROOF RACK LONGITUDINAL BARS OF TRANSPORT MEANS
JEU DE BARRES DE TOIT TRANSVERSALES PRÉVU POUR ÊTRE FIXÉ À DES BARRES DE TOIT LONGITUDINALES DE MOYENS DE TRANSPORT

(30) Priorität: 14.05.2007 CZ 200718801 U
(43) Veröffentlichungstag der Anmeldung: 24.02.2010
(73) Patentinhaber: Skoda Auto A.S., 293 60 Mladá Boleslav (CZ)
(72) Erfinder: KYNCL, Zdenek, 543 03 Vrchlabí (CZ); VANOUCEK, Jirí, 293 06 Kosmonosy (CZ); BÖHM, Vladimír, 252 10 Okres Praha-západ (CZ)
(86) Internationale Anmeldenummer: PCT/CZ2008/000053
(87) Internationale Veröffentlichungsnummer: WO 2008/138279

(56) Entgegenhaltungen:
- EP-A- 0 957 002
- WO-A-91/01233
- FR-A- 2 865 695

## Beschreibung

### Bereich der Technik

Die technische Lösung bezieht sich auf die Anordnung von Querdachträgern für Transportmittel, insbesondere für Autos und Schiffe.

### Bisheriger Stand der Technik

Dachträger für Fahrzeuge umfassen in der Regel zwei Querstangen, die an einem Paar von parallelen, an der Seite des Fahrzeugs angeordneten, Längsträgern befestigt sind. Diese Längsträger umfassen Rohrprofile aus leichten metallischen Legierungen, die zum Beispiel durch Hydroformen oder Fließpressen gefertigt werden und an ihren verbogenen Enden mit massiven Gussstücken mit Befestigungsschrauben oder anderen Aufnahmeelementen versehen sind. Gleichzeitig sind Anordnungen von Längsträgern bekannt, bei denen in Enden des fließgepressten. Profils leichte geriffelte Gussstücke mit Befestigungsschrauben eingeschoben und befestigt werden. Die Aufnahme der Querstangen an den Längsträgern erfolgt gegenwärtig üblicherweise durch Aufnahmemechanismen, die das Profil des Längsträgers umgreifen und dazu mittels eines Momentschlüssels befestigt werden. Bei wiederholtem Befestigen und Lösen der Querstangen kann es zu allmählicher Beschädigung der Sichtfläche des Längsträgers kommen. Während der Montage ist es notwendig, die Befestigungsschraube bis fast knapp zu ihrem Ende herauszudrehen, damit es möglich wird, die Bewegungsbacke in die Verzahnung im Fuß einzuführen, und danach die ganze Schraube erneut in die Mutter zu drehen. Dies ist langwierig, und es erfordert eine gewisse Geschicklichkeit. Bei Prüfungen vom Typ "City Crash" kommt es immer bei einer Klemmverbindung mit Längsträgern zu ihrer Verschiebung (Abrutschen) am Längsträger. Dabei kommt es oft zum Stoppen dieser Bewegung erst am Mittelfuß des Längsträgers. Einen gewissen Nachteil dieser Lösungen stellt ferner die Tatsache dar, dass die Querstangen keine ganz genau definierte Einbauposition haben. Gemäß der Konstruktion von Längsträgern werden verschiede Arten der Befestigungsmechanismen von Querstangen, die zum Beispiel in nachfolgenden Patentschriften beschrieben sind, eingesetzt: USA Patente 3545660, 4586638, 4877169, 4688706, 5190198, 5226570, 5385285, 5577650, 5715980, 5588572, 5715980, 5758810, 5791536, 5924614, 6119908, 6382483 und weitere.

Auch der EP-A- 0957002 veroffentlicht einen solches Querdachträger.

Die Aufgabe der vorliegenden technischen Lösung ist eine einfache und präzise Montage von Querstangen zu Längsdachträgern und insbesondere die Sicherung ihrer festen und ständigen Position nach extremer Belastung, zum Beispiel nach der Prüfung "City Crash".

### Kernpunkt der technischen Lösung

Gegenstand dieser technischen Lösung ist die Anordnung des Querdachträgers zur Befestigung an Längsdachträgern von Transportmitteln, insbesondere von Autos, die mindestens zwei Träger umfassen, wobei jeder Träger an jedem seiner Enden einen Befestigungsmechanismus zur festen Montageverbindung des Trägers mit den Längsdachträgern hat. Der Kernpunkt der technischen Lösung besteht darin, dass der Befestigungsmechanismus aus einem Stützelement, das durch seine Strebe mit durchgängigen Öffnungen an einem Paar Spannbolzen angeordnet ist, das im Längsträger befestigt ist, besteht, wobei diese Strebe des Stützelements über den Körper des Längsträgers ausläuft und hier in eine nach unten gerichtete Schale geknickt ist. Am Stützelement ist ein Sicherungselement so untergebracht, dass sie gemeinsam mit der oberen horizontalen Schalenfläche des Stützelements eine Lagerfläche für den Träger bilden. Innerhalb der Stützelementschale ist ein Exzenterkörper, der durch seinen Hohlraum am Schraubenkopf des Befestigungsmechanismus gelagert ist, angeordnet, dessen Schaft gleichzeitig nach oben durch die Öffnung im Stützelement und die Öffnung im Sicherungselement hindurch geht und im Träger befestigt ist, wobei der Exzenterkörper mit einem nach außen auslaufenden Betätigungshebel für das Anziehen und/oder das Lösen der Verbindung zwischen dem Befestigungsmechanismus und dem Träger, versehen ist.

Der Spannbolzen kann mit einem Gewindespannbolzen gebildet werden, der durch sein Gewinde-Ende in der Innenwand des Längsträgers befestigt ist, die dem gegenüberliegenden Längsträger zugewandt ist, wobei der Spannbolzenkopf einen Querschnitt entsprechend der Öffnungsgröße in der Stützelementstrebe aufweist und wobei der Schaft des Spannbolzens zwischen dem Kopf und dem Gewinde-Ende eine äußere Schulter zur Trennung der Stützelementstrebe, eingeführt am Spannbolzen, von der Längsträgerwand in angezogener Funktionsposition des befestigten Trägers zum Stützelement aufweist, wobei er im Abstand von dieser äußeren Schulter in Richtung Kopf, in Übereinstimmung mit der Stützelementstrebendicke, eine innere Schulter für ein Einrasten der Stützelementstrebe des Sicherungselementes in angezogener Funktionsposition des befestigten. Trägers zum Längsdachträger aufweist.

Das Sicherungselement kann durch ein geknickt geformtes Stahlpressstück mit einer Strebe gebildet werden, das in angezogener Position des befestigten Trägers am Stützelement anliegt, wobei seine obere horizontale Fläche an ihrem äußere Ende zum Sicherungsvorsprung mit einer länglichen Durchgangsöffnung, gebogen nach unten um die Kante des anliegenden Endes der oberen horizontalen Fläche der nach unten gerichteten Stützelementschale, übergeht, und wobei die Stützelementschale in ihrem unteren Teil so verengt und geformt ist, dass sie in angezogener Funktionsposition des befestigten Trägers durch ihre zwei Flanken in Führungs- und Sicherungsnuten, die in einer Aussparung des geknickten unteren Streben-Endes des Stützelements gebildet wurden, und gleichzeitig in die innere Schulter der Spannbolzen eingreift.

Zwischen dem Stütz- und dem Sicherungselement kann auf der horizontalen Lagerfläche der Stützelementschale ein flaches Mitnehmerelement für die Sicherung des Stützelements gegen seine Drehung gegenüber dem Träger in einer gelösten Position nach Ausbau des Trägers aus dem Längsdachträger vorliegen, das mit einem nach oben vorragenden Vorsprung versehen ist, der durch eine Längsöffnung in der horizontalen Basis des Sicherungselements hindurch geht und in die über sie angeordnete Trägeröffnung greift, wobei das Mitnehmerelement ferner mit einer Öffnung für einen Schraubendurchgang versehen ist.

Die Öffnungen im Stützelement, Mitnehmerelement und Sicherungselement zum Schraubendurchgang ausgehend vom Hohlraum des Exzenterkopfs zum Träger weisen eine längliche Form auf, und ihre Längsachse ist zu dem Längsdachträger rechtwinklig.

Der Exzenter-Betätigungshebel stützt sich in der angezogenen Funktionsposition des Befestigungsmechanismus auf eine Kappen-Innenwand des Befestigungsmechanismus, in welchem ein Schloss angeordnet ist. Sein Formbolzen geht durch eine längliche Öffnung des geknickten Sicherungsvorsprungs des Sicherheitselements hindurch.

Der Befestigungsmechanismus des Querdachträgers ist nach dieser technischen Lösung einfach. Seinen Vorteil stellen reduzierte Beschaffungskosten und eine Erhöhung der Zuverlässig der Verbindung von Quer- und Längsdachträger dar. Bei seiner Montage kommt es nicht zum direkten Kontakt mit der Körperoberfläche des Längsdachträgers. Nur bei der Montage verschiebt sich der mit Kunststoff versehene Schalenunterteil des Stützelements des Befestigungsmechanismus über die Oberkante des Längsträgers. Die Sichtseite des Längsträgers überträgt keine Kraft und bleibt dadurch ohne Beschädigung. Die Montagepositionen der Querträger sind genau durch die Lage von Nietmuttern in Längsträgerkörper-Innenwänden, in welche vor der ersten Montage Spannbolzen des Befestigungsmechanismus eingeschraubt werden, definiert. Die Montage ist sehr einfach, das Stützelement verschiebt sich in der Längsöffnung gegen den Längsträger bis zum Anschlag und dreht sich durch den Exzenter-Betätigungshebel. Der Einsatz eines Momentschlüssels ist nicht notwendig, die Spannkraft ist durch die Exzenter-Einstellung gegeben.

### Bildübersicht auf Zeichnungen

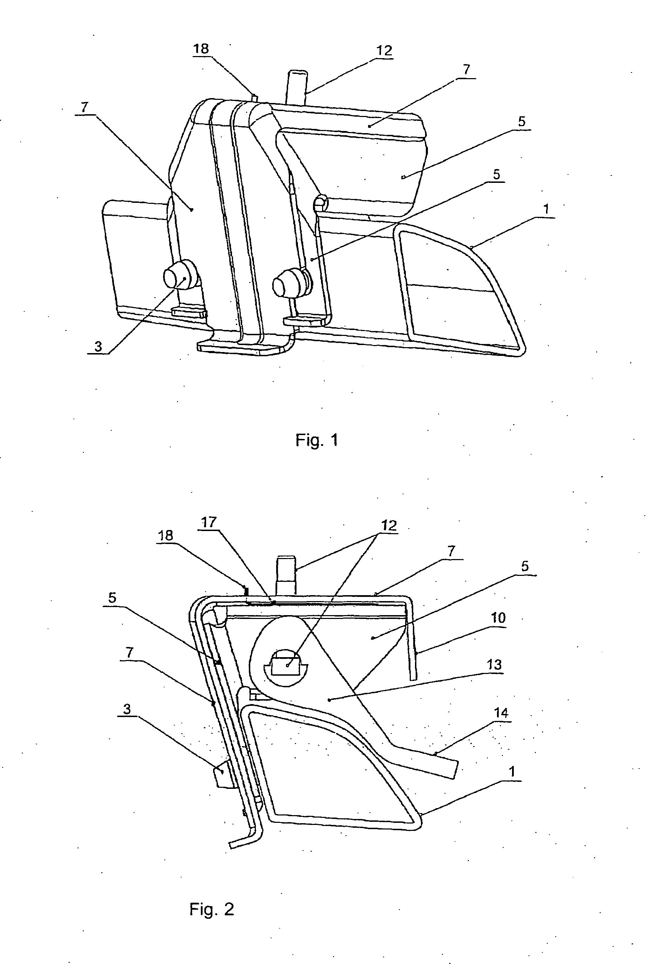

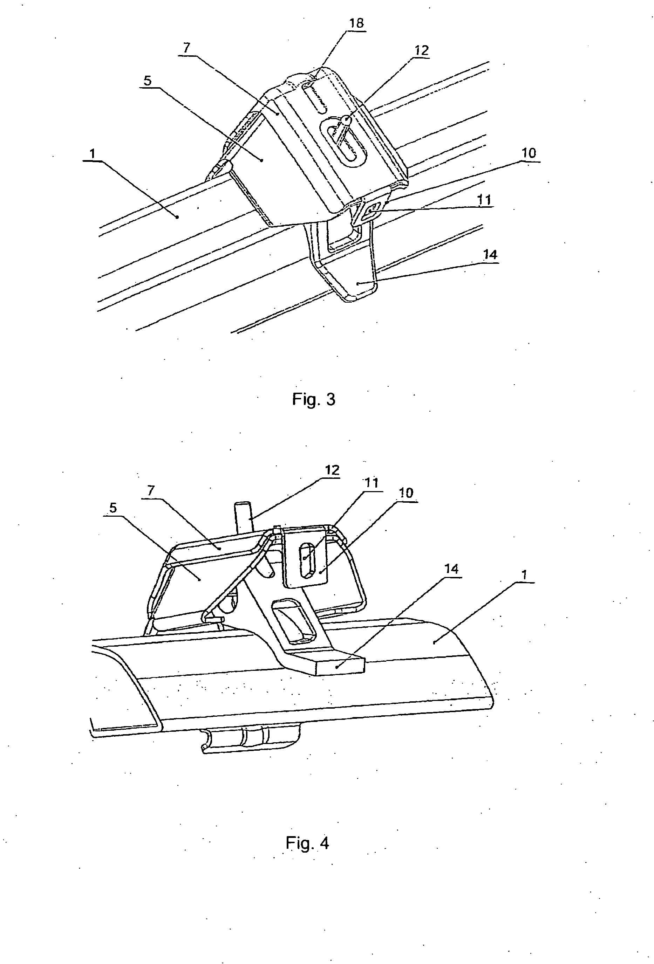

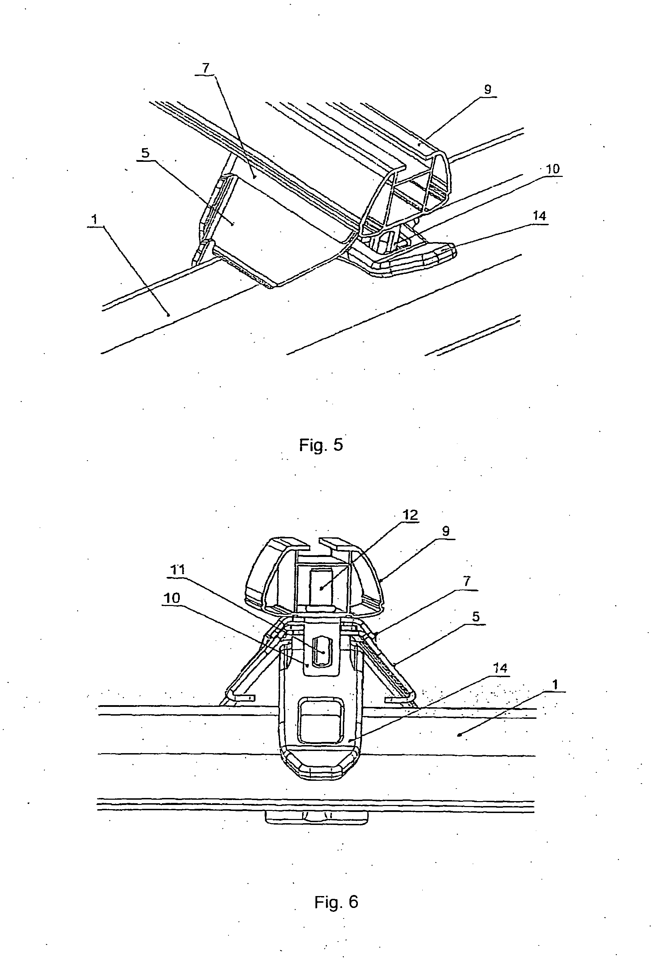

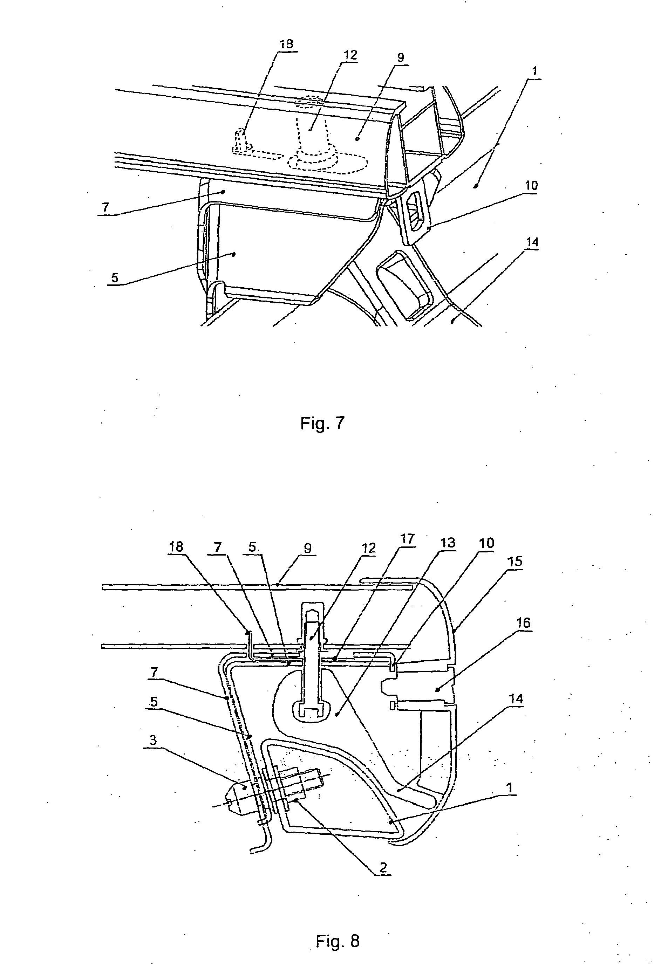

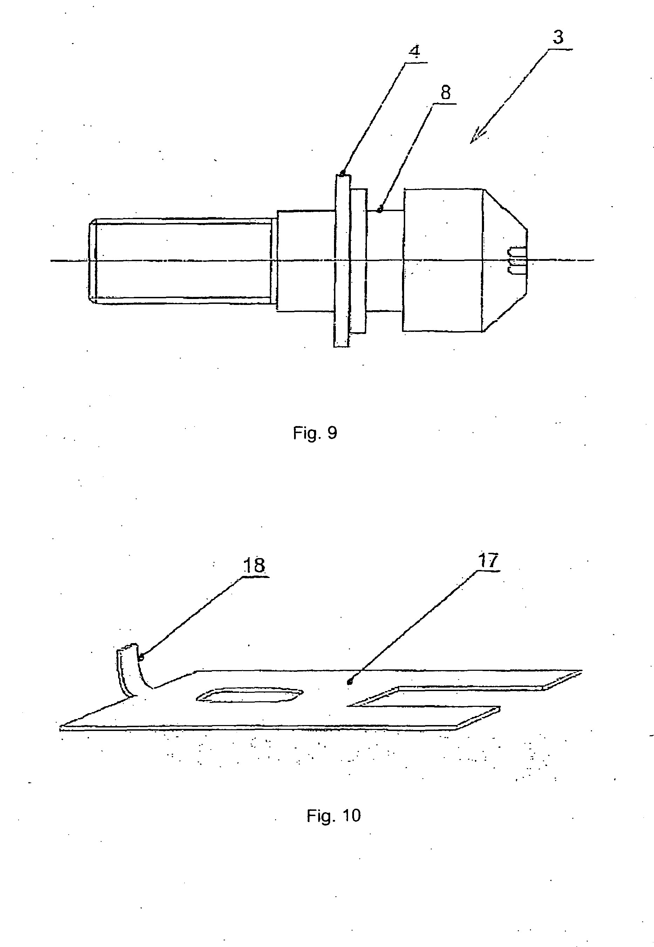

Die technische Lösung wird des Weiteren an einem konkreten Beispiel einer der möglichen Ausführungen beschrieben, und zwar mittels beigelegter Zeichnungen und nachfolgender Beispielbeschreibung dieser konkreten Ausführungen. In Fig. 1 ist ein Befestigungsmechanismus eines Trägers des Querdachträgers zu einem Längsdachträger dargestellt, gesehen von der Innenseite des Längsträgers mit Gewindespannbolzen. In Fig. 2 ist dieser Mechanismus im senkrechten Teilschnitt in angezogener Position, in Fig. 3 in angezogener Position bei Ansicht von oben, in Fig. 4 in angezogener Position, gesehen von der Außenseite des Längsträgers, dargestellt. In Fig. 5 ist dieser Mechanismus in gelöster Position und in Fig. 6 in angezogener Position, gesehen von der Außenseite des Längsträgers, dargestellt. In Fig. 7 gibt es eine weitere Darstellung des Befestigungsmechanismus in seiner angezogenen Position und in Fig. 8 im senkrechtem Schnitt in angezogener Position mit einer befestigten Kappe, die mit einem Schloss versehen ist. In Fig. 9 ist im Teilschnitt ein Gewindespannbolzen schematisch und in Fig. 10 ein flaches Metall-Mitnehmerelement mit einer länglichen Durchgangsöffnung, die einer ähnlichen Öffnung in der horizontalen Lagerfläche des Mechanismus-Stützelements entspricht, und einen nach oben vorragenden Vorsprung aufweist, dargestellt.

### Beispiele von Durchführung der technischen Lösung

Beide Träger 9 des Querdachträgers, gebildet durch Metallrohrprofil (seine Außenoberfläche kann mit einer Kunststoffschicht versehen werden), sind an ihren Enden über einen Befestigungsmechanismus 6 zerlegbar an Längsdachträgern 1 befestigt und fest mit dem Fahrzeugsdach verbunden. Jeder der beiden Längsdachträger ist durch ein abgeschlossenes Rohrprofil aus einer Aluminiumlegierung oder aus Stahl gebildet, das im Wesentlichen einen Dreieckquerschnitt mit einer nach außen gewölbten Hypotenuse aufweist (es kann sich auch um eine andere Ausführung handeln, zum Beispiel kann dies den gleichen Querschnitt entlang der ganzen Länge haben, und an beiden Enden ist dies geknickt und schräg abgeschnitten, damit die Berührungsflächen seiner Enden von der Form her der Stelle seiner Befestigung am Fahrzeugsdach entsprechen). Unter dem Begriff Rohrprofil werden zum Zweck dieser Anmeldung alle abgeschlossenen Profile von geeignetem Querschnitt, zum Beispiel rund-, oval-, polygonförmige oder unregelmäßige verstanden. Die Montagepositionen der Träger 9 der Längsdachträger werden genau durch die Lage der Nietmuttern 2, die nichtzerlegbar in der Innenwand jedes Längsträgers 1 befestigt sind, d. h. in der Wand, die zu dem gegenüberliegenden Längsträger 1 weist. Diese Muttern 2 werden paarweise nebeneinander im Abstand der definierten Teilungen beider Träger 9 der Längsträger platziert. In jeder Mutter 2 wird ein Gewindespannbolzen 3 mit einer Schulter 4 eingeschraubt, welche die Funktion einer Distanzunterlage hat und einen direkten Kontakt des Stahlstützelements 5 des Befestigungsmechanismus 6 mit der Wand des Längsträgers 1 vermeidet. Der Gewindespannbolzenkopf 3 hat einen Querschnitt, dessen Öffnungsgröße der Öffnungsgröße in der Stützelementstrebe 5 des Befestigungsmechanismus 6 entspricht, damit es ermöglicht wird, diese Strebe auf dem Gewindespannbolzen 3 locker anzuordnen. An dem Gewindespannbolzen 3 ist ferner eine innere Schulter 8 vorgesehen und zwar in einem solchen Abstand von der Schulter 4, der der Stützelementstreben-Dicke 5 des Befestigungsmechanismus 6 annähernd entspricht.

Der Befestigungsmechanismus 6 jedes Endes von einzelnen Trägern 9 des Längsdachträgers umfasst ein tragendes Stützelement 5, welches durch ein Stahlgussstück gebildet ist. Die Stützelementstrebe 5 läuft an der Innenseite des Längsträgers 1 über dessen oberen Teil hinaus, wobei sie in Richtung der Außenseite des Längsträgers 1 geknickt ist. In diesem Knickbereich geht die flache Strebe des Stützelements 5 im Wesentlichen zu einer Schale mit schrägen Flanken über, deren Boden nach unten weist und die im Bereich der Außenkante des Längsträgers 1 abgeschlossen ist. Dieser Schalenboden ist in der Mitte mit einer länglichen Durchgangöffnung versehen. Er bildet eine horizontale Lagerfläche, auf der ein Metall-Mitnehmerelement 17 mit einer länglichen Durchgangöffnung platziert ist, die einer ähnlichen Öffnung in der horizontalen Lagerfläche des Stützelementes 5 entspricht, und das einen nach oben vorragenden Vorsprung 18 im Knickbereich des Stützelements 5 aufweist.

Die Stützelementstrebe 5 ist an ihrem unteren Ende gebogen (im umgekehrten Sinn als sie im oberen Teil geknickt ist) und sie ist in ihrem Mittelbereich in dieser Kröpfung entlang der ganzen Breite mit einer Formaussparung mit zwei Führungsnuten für eine freie Verschiebung des Sicherungselements 7 des Befestigungsmechanismus 6 versehen.

Dieses Sicherungselement 7 wird durch ein geformtes Stahlgussstück mit einer Dicke, die der inneren Schulterdicke 8 des Spannbolzens 3. entspricht, gebildet. Seine Grundform entspricht der Stützelementform 5, auf dem es anliegt. Dieses umfasst auch eine Strebe, die von unten in die horizontale Fläche mit kurzen abgeschrägten Flanken geknickt ist. Diese horizontale Fläche bildet eine Basis für einen Träger 9 der Längsdachträger und überdeckt von oben die horizontale Lagerfläche des Stützelements 5 mit dem Mitnehmerelement 17. Sie ist mit zwei länglichen Durchgangsöffnungen versehen. Eine von ihnen ist kleiner, und dadurch geht ein Vorsprung 18 des Mitnehmerelements 17 hindurch. Die zweite ist größer und entspricht durch ihre Lage der länglichen Öffnung im horizontalen Schalenteil des Stützelements 5. Im Vergleich zu dieser hat sie eine größere Breite und Länge. Die horizontale Fläche des Sicherungselements 7 geht an ihrem Ende im Mittelbereich über in den nach unten geknickten Vorsprung 10, der das anliegende Ende der aufwärts gerichteten Stützelementsschale 5 umgreift. Im Vorsprung 10 des Sicherungselements 7 gibt es eine längliche Durchgangsöffnung 11. Die Sicherungselementsstrebe 7 ist in ihrem Unterbereich verengt und so geformt, dass sie durch ihre beiden Flanken in Führungsnuten in der Aussparung des umgebogenen Unterteils der Stützelementstrebe 5 und auch in die innere Schulter 8 des Spannbolzens 3 in angezogener Funktionsposition des befestigten Trägers 9 des Querdachträgers greift. An ihrem unteren Ende ist die Sicherungselementstrebe 7 mit einem Betätigungsvorsprung versehen.

Der Träger 9 des Querdachträgers aus Metallprofil ist an jedem seiner Enden mit einer Öffnung versehen, in der eine Nietmutter 19 befestigt ist, in der eine Schraube 12 eingeschraubt ist. Der Schaft 12 der Schraube geht durch längliche Öffnungen in der waagerechten Lagerfläche des Stützelements 5, Mitnehmerelements 17 und der horizontalen Sicherungselementfläche 7 hindurch. Der Schraubenkopf 12 ist im Körperhohlraum 13 des Exzenters in der Stützelementschale 5 untergebracht. Ein integraler Bestandteil dieses Exzenterkörpers 13u aus Kunststoff oder Metall ist ein Betätigungshebel des Exzenters 14, der zur Außenseite des Längsdachträgers 1 ausläuft und in dessen Mittelteil es eine Öffnung für einen Durchgang eines Vorsprungs 10 des Sicherungselements 7 bei einem Lösen des Exzenters und des Befestigungsmechanis 6 gibt. Der Exzenterkörper 13 verfügt über eine Durchgangsöffnung zum Einlegen einer Schraube 12, deren Kopf im Exzenterhohlraum an einer Metalleinlage zwischen diesem Kopf und der Oberfläche des Exzenter-Innenhohlraums für eine Kraftübertragung zwischen einer Stellschraube 12 und dem Exzenterkörper 13 anliegt.

Bei einer Trägermontage 9 des Querdachträgers wird zuerst der Träger 9 mit dem Befestigungsmechanismus 6 auf den Längsdachträger 1 (zum unteren geknickten Teil der schrägen Flanken der Stützelementschale 5 ist eine Kunststoffunterlegscheibe aufgenommen) gelegt. Dann wird jede Stützelementstrebe durch ihre zwei Öffnungen zum entsprechenden Spannbolzenpaar 3 auf der Innenschrägwand des Längsdachträgers 1 angeordnet oder aufgesteckt. Zur Erleichterung ist jeder Spannbolzen 3 an seinem Ende mit einer Anlaufkegelfläche mit einem Winkel von ca. 25 bis 45° versehen. Nach diesem Einsatz über die schräge Anlauffläche der Spannbolzen 3 wird gleichzeitig die Sicherungselementstrebe 7 angehoben und ihr direkter Kontakt mit der Stützelementstrebe 5 (mit Ausnahme des Kontakts auf der schrägen Anlauffläche der Spannbolzen 3) wird aufgehoben. Die Stützelementstrebe 5 wird bis zu ihrer Endposition auf das Spannbolzenpaar 3 angeordnet, wobei sie an deren Schulter 4 anliegt. Zwischen ihr und der anliegenden Körperfläche des Längsdachträgers 1 gibt es also immer einen Zwischenraum. Als Folge des eigenen Gewichts fällt die Sicherheitselementstrebe 7 mit beiden Flanken in Führungsnuten in der Aussparung des Unterteils der Stützelementstrebe 5 und gleichzeitig auf die Innenschulter 8 jedes der Spannbolzen 3. Dadurch wird das Sicherheitselement 7 in direkten Kontakt mit dem Stützelement 5 geführt, und gleichzeitig wird es gegen Rückverschiebung gesichert. Durch den Exzenter-Betätigungshebel 14 wird mittels der Stellschraube 12 der Träger 9 des Querdachträgers des Befestigungsmechanismus 6 fest angezogen, und dadurch wird er einerseits gegen Querverschiebung, andererseits gegen ein Lösen aus dem Spannbolzen 3 gesichert. Diese Verbindung ist selbstsperrend. Der Exzenter-Betätigungshebel 14 ist darüber hinaus noch gegen ein Lösen der Kunststoffkappe 15 des Befestigungsmechanismus 6 gesichert, auf deren Wand sich ihr Ende nach der Montage stützt. Im Körper der Kunststoffkappe 15 ist ein Schloss 16 mit geformtem Bolzen (T - Stein) angeordnet, der durch die Öffnung 11 im Vorsprung 10 des Sicherungselements 7 hindurch geht, und nach Schlüsseldrehung und -schließung 16 stützt er sich auf die Wände dieses Vorsprungs 10.

Das Mitnehmerelement 17 mit Zunge, das in die anliegende Öffnung im Träger 9 des Querdachträgers eingreift, vermeidet eine Drehung des Stützelements 5 bei der Montage oder Demontage des Trägers 9 des Querdachträgers. Zur Handhabungserleichterung des Befestigungsmechanismus 6 bei der Trägerdemontage 9 des Querdachträgers kann zwischen das Stützelement 5 und das Sicherungselement 7 eine Feder eingelegt werden.

### Bezugszeichenliste

- 1: Längsdachträger
- 2: Nietmutter
- 3: Spannbolzen
- 4: Schaftaußenschulter des Spannbolzens 3
- 5: Stützelement des Befestigungsmechanismus 6
- 6: Befestigungsmechanismus
- 7: Sicherungselement des Befestigungsmechanismus 6
- 8: Schaftinnenschulter des Spannbolzens 3
- 9: Träger des Querdachträgers
- 10: Vorsprung des Sicherungselements 7
- 11: Längliche Öffnung in Kröpfung 10
- 12: Schraube
- 13: Exzenterkörper
- 14: Exzenter-Betätigungshebel
- 15: Kappe des Befestigungsmechanismus 6
- 16: Schloss mit geformtem Bolzen
- 17: Mitnehmerelement
- 18: Vorsprung des Mitnehmerelementes
- 19: Nietmutter im Träger 9

## Patentansprüche

1. Querdachträger zur Befestigung an Längsdachträgern von Transportmitteln, insbesondere Fahrzeugen, umfassend zumindest zwei Träger (9), wobei jeder Träger (9) an seinem Ende einen Befestigungsmechanismus (6) für eine feste Montageverbindung des Trägers (9) mit Längsdachträgern (1) hat,
**dadurch gekennzeichnet,**
**dass** dieser Befestigungsmechanismus (6) ein Stützelement (5) umfasst, das mittels einer Strebe mit Durchgangsöffnungen auf einem Spannbolzenpaar (3) angeordnet ist, das im Längsträger (1) aufgenommen wird, wobei diese Stützelementstrebe (5) bis über den Körper des Längsträgers (1) ausläuft und hier zu einer nach unten gerichteten Schale geknickt ist, wobei am Stützelement (5) ein Sicherungselement (7) so platziert ist, dass sie miteinander mit der oberen horizontalen Schalenfläche des Stützelements (5) eine Lagerfläche für den Träger (9) bilden und wobei innerhalb der Stützelementschale (5) ein Exzenterkörper (13) angeordnet ist, welcher durch seinen Hohlraum auf einem Schraubenkopf (12) des Befestigungsmechanismus (6) gelagert ist, dessen Schaft nach oben gleichzeitig durch eine Öffnung im Stützelement (5) und eine Öffnung im Sicherungselement (7) hindurch geht, und der im Träger (9) befestigt ist, wobei der Exzenterkörper (13) mit einem nach außen auslaufenden Betätigungshebel (14) zum Anziehen und/oder zum Lösen der Verbindung des Befestigungsmechanismus (6) mit-dem Träger (9) versehen ist.

2. Querdachträger gemäß Anspruch 1,
**dadurch gekennzeichnet,**
**dass** der Spannbolzen (3) durch einen Spannbolzen (3) gebildet wird, der mittels seines Gewinde-Endes in der Innenwand des Längsträgers (1) befestigt ist, die dem gegenüberliegenden Längsträger (1) zugewandt ist, wobei der Spannbolzenkopf (3) einen Querschnitt hat, welcher der Öffnungsgröße in der Stützelementstrebe (5) entspricht, und wobei der Schaft des Spannbolzens (3) zwischen dem Kopf und dem Gewinde-Ende eine äußere Schulter (4) aufweist für eine Trennung der Stützelementstrebe (5), die auf dem Spannbolzen (3) angeordnet ist, von der Seite des Längsträgers (1) in angezogener Funktionsposition des befestigten Trägers (9) zum Stützelement (5), wobei im Abstand von dieser äußeren Schulter (4) in Richtung Kopf sie im Wesentlichen der Stützelementstreben-Dicke (5) entspricht und wobei er eine innere Schulter (8) für ein Einrasten der Stützelementstrebe (7) in angezogener Funktionsposition des befestigten Trägers (9) am Längsdachträger (1) hat.

3. Querdachträger gemäß Anspruch 1 oder 2,
**dadurch gekennzeichnet,**
**dass** das Sicherungselement (7) durch ein geknicktes geformtes Stahlgussstück mit Strebe gebildet wird, das in angezogener Funktion des befestigten Trägers (9) in Anlage zum Stützelement (5) kommt, wobei seine obere horizontale Fläche an ihrem äußeren Ende zu einem Sicherungsvorsprung (10) mit länglicher Durchgangsöffnung (11), geknickt nach unten um die Kante des anliegenden Abschlusses der nach unten gerichteten Stützelementstrebe (5), übergeht, und wobei die Sicherungselementstrebe (7) in ihrem Unterteil so verengt und geformt ist, dass sie in der angezogenen Funktionsposition des befestigten Trägers (9) durch ihre beide Flanken in Führungs- und Sicherungsnuten, gebildet in einer Aussparung des gebogenen unteren Endes der Stützelementstrebe (5), und gleichzeitig in die Innenschulter (8) der Spannbolzen (3) greift.

4. Querdachträger gemäß einem der Ansprüche 1 bis 3,
**dadurch gekennzeichnet,**
**dass** zwischen dem Stützelement (5) und dem Sicherungselement (7) auf der horizontalen Lagerfläche einer Stützelementschale (5) ein flaches Mitnehmerelement (17) zur Sicherung des Stützelements (5) gegen seine Drehung gegenüber dem Träger (9) in gelöster Position nach Herausnehmen des Trägers (9) von dem Längsdachträger (1) vorgesehen ist, das mit einem nach oben vorragenden Vorsprung (18) versehen ist, der durch eine längliche Öffnung in der horizontalen Basis des Sicherungselementes (7) hindurch geht und in die darüber angeordnete Öffnung im Träger (9) greift, wobei das Mitnehmerelement (17) ferner mit einer Öffnung für einen Schraubendurchgang (12) versehen ist.

5. Querdachträger gemäß Anspruch 4,
**dadurch gekennzeichnet,**
**dass** Öffnungen im Stützelement (5), im Mitnehmerelement (17) und
Sicherungselement (7) für den Schraubendurchgang (12) vom Exzenterkörper-Hohlraum (13) zum Träger (9) eine längliche Form aufweisen und dass ihre Längsachse zu dem Längsdachträger (1) rechtwinklig ist.

6. Querdachträger gemäß einem der Ansprüche 3 bis 5,
**dadurch gekennzeichnet,**
**dass** der Betätigungshebel (14) des Exzenters sich in der angezogenen Funktionsposition des Befestigungsmechanismus (6) auf die Innenwand einer Kappe (15) des Befestigungsmechanismus (6) stützt, in welchem ein Schloss (16) angeordnet ist, wobei sein geformter Bolzen durch eine längliche Öffnung (11) des geknickten Sicherungsvorsprungs (10) des Sicherungselementes (7) hindurch geht.

## Claims

1. Cross bar roof rack for fastening to roof rack longitudinal bars of transport means, in particular vehicles, comprising at least two bars (9), wherein the end of each bar (9) has a fastening mechanism (6) for a fixed assembly connection of the bar (9) to roof longitudinal bars (1), **characterized in that** said fastening mechanism (6) comprises a supporting element (5) which is arranged by means of a strut having passage openings on a pair of clamping bolts (3) accommodated in the longitudinal bar (1), said supporting element strut (5) tapering off beyond the body of the longitudinal bar (1) where said supporting element strut is bent to form a downwardly directed shell, a securing element (7) being placed on the supporting element (5) in such a manner that said securing element and supporting element together and with the upper horizontal shell surface of the supporting element (5) form a bearing surface for the bar (9), and an eccentric body (13) being arranged within the supporting element shell (5), the cavity of which eccentric body is mounted on a screw head (12) of the fastening mechanism (6), the shank of which screw head passes upwards simultaneously through an opening in the supporting element (5) and an opening in the securing element (7) and is fastened in the bar (9), and the eccentric body (13) being provided with an outwardly tapering-off actuating lever (14) for tightening and/or loosening the connection of the fastening mechanism (6) to the bar (9).

2. Cross bar roof rack according to Claim 1, **characterized in that** the clamping bolt (3) is formed by a clamping bolt (3) which is fastened by means of the threaded end thereof in the inner wall of the longitudinal bar (1), which inner wall faces the opposite longitudinal bar (1), the clamping bolt head (3) having a cross section which corresponds to the size of the opening in the supporting element strut (5), and the shank of the clamping bolt (3) having an outer shoulder (4) between the head and the threaded end for separation of the supporting element strut (5), which is arranged on the clamping bolt (3), from the side of the longitudinal bar (1) in the tightened functional position of the bar (9) fastened with respect to the supporting element (5), said shank substantially corresponding to the supporting element strut thickness (5) at a distance from said outer shoulder (4) in the direction of the head, and said shank having an inner shoulder (8) for latching the supporting element strut (5) to the roof rack longitudinal bar (1) in the tightened functional position of the fastened bar (9).

3. Cross bar roof rack according to Claim 1 or 2, **characterized in that** the securing element (7) is formed by a bent, shaped steel casting with a strut, said securing element, in the tightened function of the fastened bar (9), coming into contact with the supporting element (5), the upper horizontal surface of said strut merging at the outer end of said surface into a securing projection (10) having an elongate passage opening (11), which projection is bent downwards around the edge of the adjacent end of the downwardly directed supporting element strut (5), and the lower part of the securing element strut (7) being narrowed and shaped in such a manner that, in the tightened functional position of the fastened bar (9), said strut grips by means of both flanks thereof in guide and securing grooves, formed in a cutout in the bent lower end of the supporting element strut (5), and at the same time grips into the inner shoulder (8) of the clamping bolts (3).

4. Cross bar roof rack according to one of Claims 1 to 3, **characterized in that** a flat driver element (17) is provided between the supporting element (5) and the securing element (7) on the horizontal bearing surface of a supporting element shell (5) and is intended for securing the supporting element (5) against rotating in relation to the bar (9) in the released position after the bar (9) has been removed from the roof rack longitudinal bar (1) said driver element being provided with an upwardly projecting projection (18) which passes through an elongate opening in the horizontal base of the securing element (7) and grips into the opening arranged thereabove in the bar (9), the driver element (17) furthermore being provided with an opening for passage (12) of a screw.

5. Cross bar roof rack according to Claim 4, **characterized in that** openings in the supporting element (5), in the driver element (17) and securing element (7) for the passage (12) of a screw from the eccentric-body cavity (13) to the bar (9) have an elongate shape, and **in that** the longitudinal axis thereof is at right angles to the roof rack longitudinal bar (1).

6. Cross bar roof rack according to one of Claims 3 to 5, **characterized in that**, in the tightened functional position of the fastening mechanism (6), the actuating lever (14) of the eccentric is supported on the inner wall of a cap (15) of the fastening mechanism (6) in which a lock (16) is arranged, the shaped bolt of said lock passing through an elongate opening (11) in the bent securing projection (10) of the securing element (7).

## Revendications

1. Traverse de support pour toit destinée à être fixée sur des longerons de toit de moyens de transport, notamment de véhicules, comprenant au moins deux supports (9), chaque support (9) ayant à son extrémité un mécanisme de fixation (6) pour une connexion de montage fixe du support (9) à des longerons de toit (1),
**caractérisé en ce que**
ce mécanisme de fixation (6) comprend un élément de support (5) qui est disposé au moyen d'un montant comprenant des ouvertures de passage sur une paire de boulons de serrage (3) qui est reçue dans le longeron (1), ce montant d'élément de support (5) se terminant au-delà du corps du longeron (1) et étant infléchi vers une coque orientée vers le bas, un élément de fixation (7) étant placé sur l'élément de support (5) de telle sorte qu'ils forment l'un avec l'autre, avec la surface de coque horizontale supérieure de l'élément de support (5), une surface d'appui pour le support (9), un corps d'excentrique (13) étant disposé à l'intérieur de la coque d'élément de support (5), lequel est supporté par sa cavité sur une tête de vis (12) du mécanisme de fixation (6), dont la tige traverse en même temps vers le haut une ouverture dans l'élément de support (5) et une ouverture dans l'élément de fixation (7), et lequel est fixé dans le support (9), le corps d'excentrique (13) étant pourvu d'un levier de commande (14) se terminant vers l'extérieur pour visser et/ou pour desserrer la connexion du mécanisme de fixation (6) au support (9).

2. Traverse de support pour toit selon la revendication 1,
**caractérisée en ce que**
le boulon de serrage (3) est formé par un boulon de serrage (3) qui est fixé au moyen de son extrémité filetée dans la paroi interne du longeron (1) qui est tournée vers le longeron opposé (1), la tête du boulon de serrage (3) ayant une section transversale qui correspond à la taille de l'ouverture dans le montant d'élément de support (5), la tige du boulon de serrage (3) entre la tête et l'extrémité filetée présentant un épaulement extérieur (4) pour séparer le montant d'élément de support (5) qui est disposé sur le boulon de serrage (3), et le côté du longeron (1) dans une position fonctionnelle vissée du support fixé (9) par rapport à l'élément de support (5), la tige correspondant essentiellement à l'épaisseur du montant d'élément de support (5) à une distance de cet épaulement extérieur (4), dans la direction de la tête, et la tige présentant un épaulement intérieur (8) pour un encliquetage du montant d'élément de support (5) dans la position fonctionnelle vissée du support fixé (9) sur le longeron de toit (1).

3. Traverse de support pour toit selon la revendication 1 ou 2,
**caractérisée en ce que**
l'élément de fixation (7) est formé par une pièce en fonte d'acier façonnée et infléchie, avec des montants, qui, dans l'état fonctionnel vissé du support fixé (9), vient en appui par rapport à l'élément de support (5), sa surface horizontale supérieure, à son extrémité extérieure, se prolongeant par une saillie de fixation (10) avec une ouverture de passage oblongue (11), de manière infléchie vers le bas autour de l'arête de la terminaison adjacente du montant d'élément de support (5) orienté vers le bas, le montant d'élément de fixation (7) étant rétréci et façonné dans sa partie inférieure de telle sorte qu'il vienne en prise dans la position fonctionnelle vissée du support fixé (9), par ses deux flancs, dans des rainures de guidage et de fixation, formées dans un évidement de l'extrémité inférieure recourbée du montant d'élément de support (5), et simultanément avec l'épaulement intérieur (8) du boulon de serrage (3).

4. Traverse de support pour toit selon l'une quelconque des revendications 1 à 3,
**caractérisée en ce**
**qu'**entre l'élément de support (5) et l'élément de fixation (7), sur la surface d'appui horizontale d'une coque d'élément de support (5), est prévu un élément d'entraînement plat (17) pour fixer l'élément de support (5) de manière solidaire en rotation par rapport au support (9) dans la position desserrée après le retrait du support (9) du longeron de toit (1), qui est pourvu d'une saillie (18) saillant vers le haut, qui traverse une ouverture oblongue dans la base horizontale de l'élément de fixation (7) et qui vient en prise dans l'ouverture disposée au-dessus dans le support (9), l'élément d'entraînement (17) étant en outre pourvu d'une ouverture pour un passage de vis (12).

5. Traverse de support pour toit selon la revendication 4,
**caractérisée en ce que**
des ouvertures dans l'élément de support (5), dans l'élément d'entraînement (17) et dans l'élément de fixation (7) pour le passage de vis (12) depuis la cavité du corps d'excentrique (13) jusqu'au support (9) présentent une forme oblongue et **en ce que** leur axe longitudinal est à angle droit par rapport au longeron de toit (1).

6. Traverse de support pour toit selon l'une quelconque des revendications 3 à 5,
**caractérisée en ce que**
le levier de commande (14) de l'excentrique s'appuie dans la position fonctionnelle vissée du mécanisme de fixation (6) sur la paroi interne du capuchon (15) du mécanisme de fixation (6), dans lequel mécanisme de fixation est disposée une serrure (16), son boulon façonné traversant une ouverture oblongue (11) de la saillie de fixation infléchie (10) de l'élément de fixation (7).
